# FASCICULE DE BREVET EUROPEEN

(11) **EP 0 323 455 B1**
(45) Date de publication et mention de la délivrance du brevet: **17.03.1993**
(21) Numéro de dépôt: 87904272.9
(22) Date de dépôt: 29.06.1987
(51) Int. Cl.: G01F 15/18

(54) **SYSTEME MODULAIRE DE MONTAGE DE LIGNES POUR LA DISTRIBUTION DE FLUIDES**
MODULARSYSTEM FÜR DEN ZUSAMMENBAU VON LEITUNGEN FÜR DIE VERTEILUNG EINES FLUIDS
MODULAR SYSTEM FOR THE MOUNTING OF LINES FOR THE DISTRIBUTION OF FLUIDS

(30) Priorité: 27.06.1986 FR 8610027
(43) Date de publication de la demande: 12.07.1989
(73) Titulaire: SOCIETE A.S.M. QUALIFLOW SARL, F-34000 Montpellier (FR)
(72) Inventeur: GUTMANN, Philippe, F-75016 Paris (FR); JANSSEN, Erik, F-34100 Montpellier (FR)
(74) Mandataire: Ravina, Bernard
(86) Numéro de dépôt international: FR8700252
(87) Numéro de publication internationale: WO8800333

(56) Documents cités:
- CH-A- 0 279 078
- DE-U- 7 732 504
- FR-A- 2 570 493
- GB-A- 0 383 087
- US-A- 1 860 627

## Description

La présente invention a pour objet un système modulaire de montage de lignes pour la distribution, le contrôle et la mesure de débits de fluides humides ou gazeux notamment de gaz de haute pureté et les éléments constitutifs du dit système en vue de la réalisation de panneaux de gaz.
On entend par panneaux de gaz un ensemble de moyens et circuits de distribution disposés suivant une ou plusieurs dimensions et généralement enfermés dans une enceinte, armoire ou boitier.

La distribution de gaz, notamment de gaz de haute pureté ou de gaz rare ou toxique s'effectue par des lignes constituées de composants tels que vannes à plusieurs voies, controleurs de débit, vannes de réglage, filtres, pompes, manomètres, vannes d'arrêt manuelle ou pneumatique ou électrique ou système électronique et autres composants.

L'invention est décrite dans une application préférentielle mais non limitative à la distribution et au contrôle de débits de gaz mais il va de soi qu'elle peut s'appliquer à tout fluide liquide humide ou gazeux.

La distribution et le contrôle des débits de gaz de haute pureté ou de gaz rare ou de gaz dangereux pose plusieurs problèmes.
Un des premiers problèmes rencontré est la nécessité de réduire le plus possible la longueur du circuit pour obtenir la plus grande précision possible de la distribution.
Un autre des problèmes rencontrés réside dans la nécessité de pouvoir, en fonction des besoins, remplacer dans une ligne donnée un composant par un autre, soit pour modifier la ligne, soit dans le cas d'intervention sur celle-ci pour réparation ou nettoyage des composants.

La technique connue a apporté des solutions à ces problèmes en proposant des composants tels qu'énoncés plus haut raccordables entre eux par des raccords à vis male et femelle et dont les dimensions entre entrée et sortie sont normalisées, chaque composant ayant une dimension longitudinale ou transversale égale à "NV" où "N" est un nombre entier égal ou supérieur à l'unité ou à une fraction de l'unité et "V" est une valeur constante. Cette normalisation permet théoriquement de substituer à un composant d'une ligne un autre composent ayant ou non même fonction.

Il a été également proposé, pour simplifier le montage, des supports de ligne constitués de platines ou plaques percées d'ensembles de taraudage normalisés en écartement longitudinal et transversal la distance entre deux ensembles successifs, soit dans un sens longitudinal soit dans un sens transversal étant une valeur constante "v" et les composants ayant des dimensions modulaires égales à "NV".

Dans ce sens, le brevet DE-A-1 936 974 fait usage d'un support constitué d'une plaque perforée suivant un maillage normalisé.

La demande de brevet FR-A-2570493 du même demandeur, fait usage d'un support constitué d'une platine portant des ensembles de taraudage suivant un maillage normalisé avec les dimensions de composants.

L'expérience a démontré que ces derniers développements de la technique connue, présentaient des inconvénients et des limites d'utilisation.

L'usage d'un support constitué par une platine présente entre autres inconvénients celui de n'offrir qu'un sens d'accès au composant pour intervention sur ceux-ci par exemple en vue de leur démontage.
Il interdit en outre le montage et l'extension des lignes en trois dimensions en n'offrant que des possibilités en longueur et largeur.

La présente invention vise à obvier aux inconvénients ci-dessus en proposant un système modulaire de montage de circuit dans l'application de l'invention à la distribution, au contrôle et à la mesure de débit de gaz qui permette une grande accessibilité aux différents composants et qui offre en outre la possibilité de monter des lignes en trois dimensions, ce qui est particulièrement avantageux dans certains cas, ces résultats se retrouvant dans les autres applications de l'invention.

La présente invention vise en outre à proposer un système doté de moyens permettant l'intégration de composants non normalisés, ce qui permet lors de la réalisation d'un circuit de gaz d'utiliser des composants existants soit sur l'ensemble d'une ligne, soit dans une ligne donnée, soit entre les lignes par exemple pour montage de pompes ou manomètres.
A cet effet, le système modulaire de montage de circuits pour la distribution, le contrôle et la mesure des débits de gaz, notamment de gaz de haute pureté, le dit circuit comprenant différents composants tels que vanne d'arrêt à commande manuelle, vanne à quatre voies à commande pneumatique, vanne pneumatique à deux voies, filtre, contrôleur de débit massique et autres, les différents composants devant être montés sur un support et raccordés entre eux pour l'établissement de lignes dans le même sens ou intreconnectés pour l'établissement de circuits, les dits composants ayant entre deux extrémités de circuit dans le sens longitudinal et éventuellement dans le sens transversal des dimensions modulaires, caractérisé en ce que le support est constitué d'une ou de plusieurs lames rigides dotées d'ensembles de taraudage pour la fixation des composants, la distance entre deux ensembles successifs étant une valeur constante V normalisée avec les dimensions des composants, les dites lames dont la largeur est inférieure à la valeur constante V, étant montées sur les dispositifs support de telle sorte qu'il existe un angle de 90° entre les directions longitudinales des dits éléments et les dispositifs supports étant dotés d'ensembles de taraudage, la distance entre eux étant une valeur constante égale à V.
Cette disposition de l'invention permet une configuration en râtelier du support entre les lames duquel les composants sont accessibles pratiquement de tous côtés.

D'autres avantages et caractéristiques de l'invention apparaîtront à la lecture de la description ci-après de formes de réalisation préférentielles données à titre d'exemple non limitatif dans lesquels :
- la figure 1 est une vue en plan d'un système de montage selon l'invention,
- la figure 2 est une vue en plan d'une lame composant de base du support,
- les figures 3 et 4 sont des vues en plan et en coupe d'accessoires s'adaptant sur les lames de la figure 2,

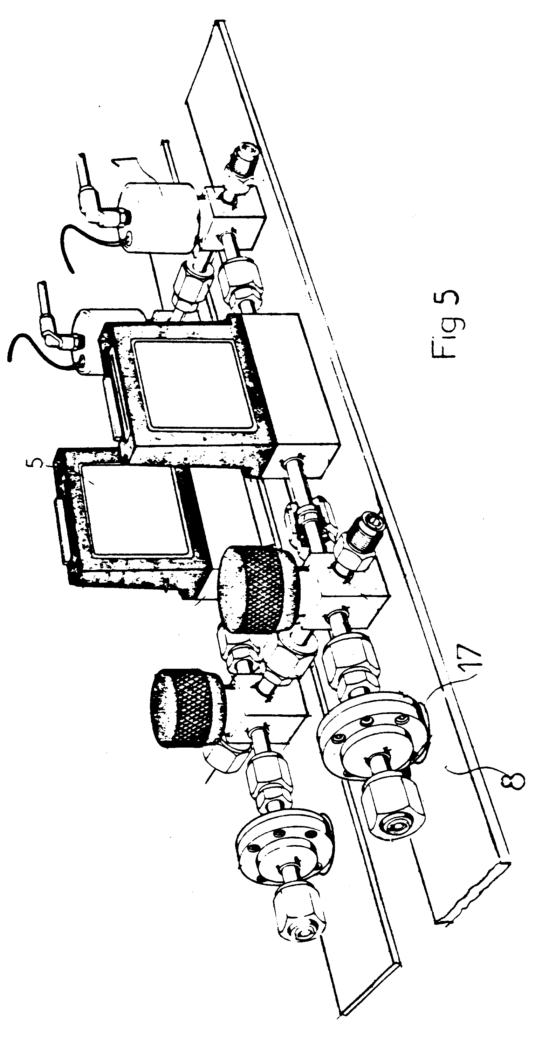

- la figure 5 est une vue en perpective d'une ligne de gaz selon le système objet de l'invention,

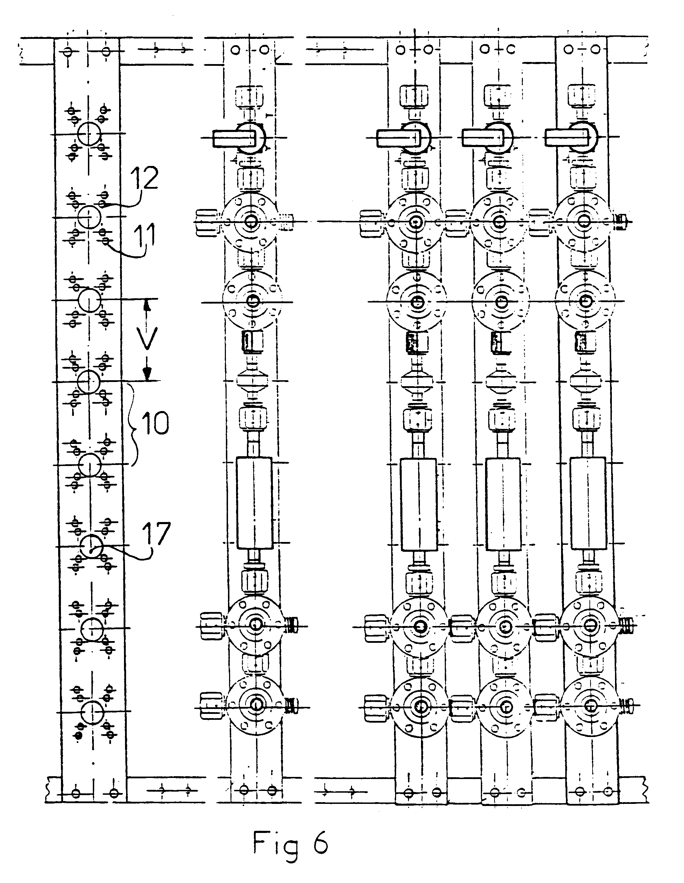

- la figure 6 est une vue en plan d'une autre forme de réalisation du système de montage,

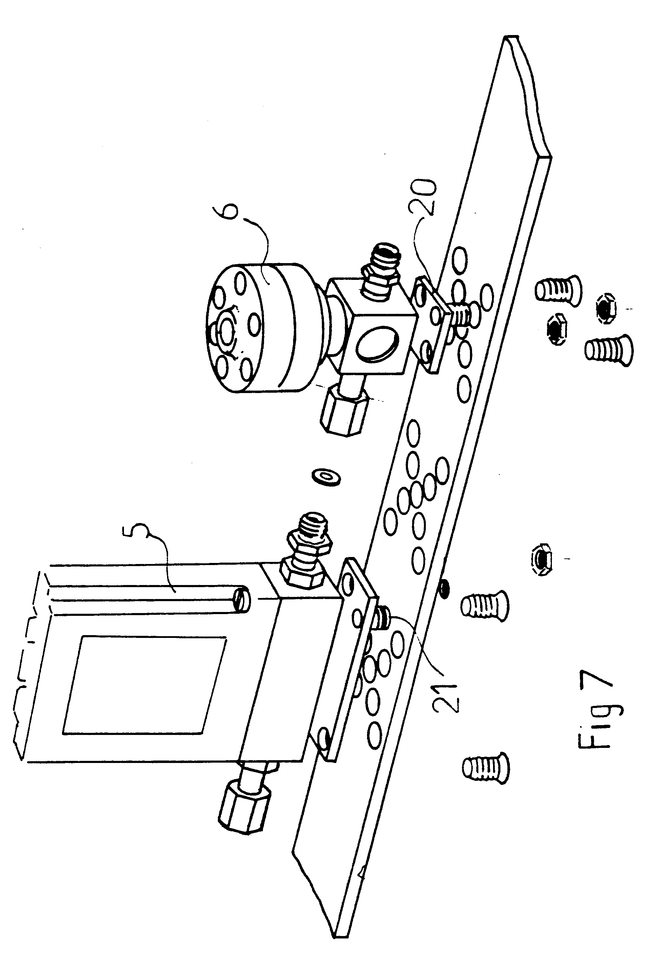

- la figure 7 illustre le montage des cales.

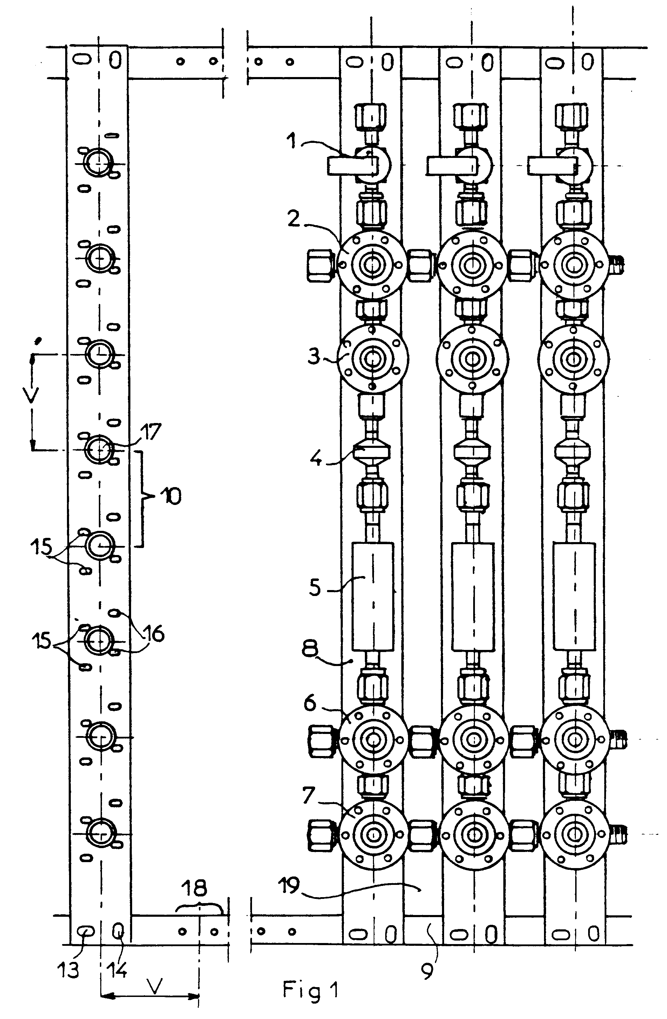

La figure 1 représente à titre d'exemple un circuit de gaz selon le système de montage, objet de l'invention dont il sera seulement mentionné les composants d'une ligne pour simplifier la description.
Cette ligne comprend une vanne d'arrêt à commande manuelle 1, une vanne pneumatique 2 à quatre voies pour raccordement avec une ligne parallèle représentée une vanne pneumatique à deux voies 3, un filtre 4, un contrôleur de débit 5, une vanne pneumatique à quatre voies 6 et une vanne pneumatique 7 à deux voies.
Chaque ligne de gaz est portée par une lame longitudinale 8 à laquelle sont fixés ses composants chacune des lames 8 étant montée de préférence à chacune de ses extrémités sur des dispositifs supports tels que des lames transversales 9.

Chacune des lames 8 est dotée d'ensembles 10 de perforations avec taraudage pour la fixation par vissage des composants.
Suivant l'invention, la distance entre deux ensembles de taraudage 10 successifs dans le sens longitudinal de la bande, est égal à une valeur constante V ou fraction ou multiple de V.

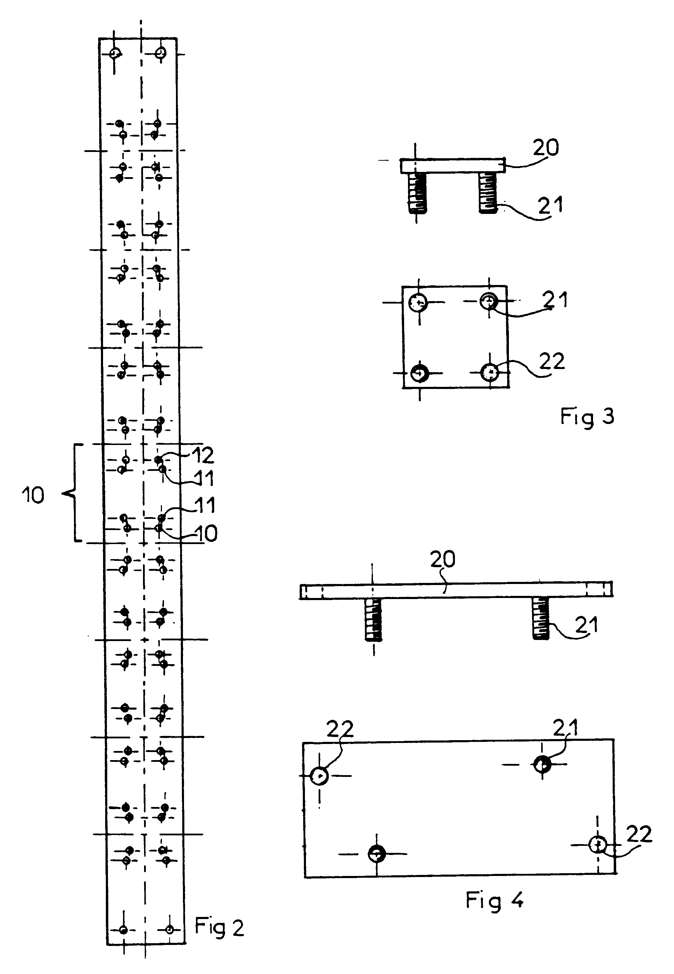

Selon l'invention telle que représentée à la figure 2, chaque ensemble de taraudage est composé de quatre taraudages disposés en forme de rectangle.
Chaque taraudage est réalisé à égale distance de l'axe médian longitudinal AA' de la bande 8.

Suivant une forme de réalisation de l'invention représentée à la figure 2, chaque ensemble de taraudage 10 comprend P fois 2 taraudages 11 (P étant égal ou supérieur à un) disposés suivant un rectangle et P fois deux taraudages 12 disposés suivant un rectangle de plus grande longueur et plus petite largeur que celui délimité par les taraudages 11.

Les taraudages 12 de chacune des largeurs du rectangle ainsi défini sont sensiblement tangeants aux taraudages 11 du même côté du rectangle défini par ceux-ci et sont plus près de l'axe AA' que ceux-ci.

Chaque ensemble de taraudage 10 définit une section de lame. La dernière section de lame à chaque extrémité de celle-ci porte un seul jeu de taraudage 11/12 et non deux et est dotée de perçages 13/14 de montage sur les lames transversales 8.
Les perçages 13/14 sont de forme oblongue, l'un 13 est orienté suivant l'axe longitudinal, l'autre 14 est orienté suivant l'axe transversal en sorte de permettre un jeu de montage et démontage de la lame suivant ces deux axes.

Suivant une autre forme de réalisation de l'invention représentée à la figure 1, chaque ensemble de taraudage 10 comprend deux taraudages 15 sur un même axe longitudinal et deux taraudages 16 sur un autre axe longitudinal de part et d'autre de l'axe AA', l'un des taraudages étant déporté par rapport à l'autre en sorte que les taraudages 15/16 délimitent un parallélogramme.

Les taraudages 15 sont oblongs et orientés transversalement à l'axe AA' mais il va de soi qu'ils peuvent être orientés suivant cet axe ou également être circulaire.

Suivant une autre forme de réalisation, telle que représentée à la figure 1 entre chaque groupe de taraudage 10, la lame est dotée d'un perçage 17 ou d'un évidement ou d'une diminution d'épaisseur.
L'évidement ou perçage 17 de forme circulaire ou autre, peut être réalisé également entre les taraudages d'un même ensemble.

Il va de soi que cette forme de réalisation représentée sur la lame de la figure 1 peut également être réalisée sur la lame du type représenté à la figure 2.

Chacun des dispositifs support est de préférence constitué par une lame transversale 9 et est doté d'ensembles de perçages 18 constitués de deux perçages sur son axe longitudinal.

La distance entre chaque ensemble de perçage est une constante égale à V ou fraction ou multiple de V.
De ce fait, lorsque les lames 8 sont fixées sur les lames 9 à des perçages successifs de celles-ci, leurs ensembles de taraudage 10 sont séparés de leurs ensembles successifs dans le sens longitudinal comme dans le sens transversal par une distance égale à la valeur constante V ou fraction ou multiple de V et un intervalle 19 est ménagé entre chaque lame 8.

Cette disposition de l'invention présente de nombreux avantages. Elle rend les composants plus accessibles par le côté, ce qui permet d'établir des lignes de gaz en trois dimensions.

La communication entre deux niveaux de lignes peut se faire par les perçages 17 des lames.
La présente invention permet en outre de faire des montages de lignes tête bêche ou suivant un plan horizontal et un plan sécant vertical ou non en utilisant par exemple des lames coudées.

Elle permet en outre d'obtenir une bonne ventilation des lignes de gaz, ce qui est particulièrement intéressant dans le cas d'utilisation pour des gaz toxiques.

Chacun des composants de la ligne de gaz a, entre chaque extrémité de son ou ses conduits de gaz, une longueur égale à "n" "v" ou "n" est un nombre entier égal ou supérieur à l'unité ou à une fraction de l'unité.

Dans l'exemple de la figure 1, le nombre "n" est égal à un pour les composants 1, 2, 3, 4 et à deux pour le composant 5.
Ce nombre est égal à un pour les composants 2, 6, 7 dans le sens transversal.

Selon l'invention, chaque composant a une hauteur identique 4 entre l'axe de son conduit de sortie (ou d'entrée de gaz) et sa base qui repose sur la lame.
De préférence selon l'invention, chacun des composants tels que vannes ou contrôleur de débit ou autre, à l'exception des seuls conduits de longueur normalisés, a une base plane qui repose sur la lame 1.

Dans le cas de composants tels que le filtre 4 représenté à la figure 1 dont la hauteur d'axe est supérieure à h, h étant la hauteur normalisée, les perçages ou évidements 17 permettent son positionnement.
Le système de raccordement des composants entre eux, de longueur n V est dans le présent cas un système male, femelle.
Un des composants par exemple 1 présente à une de ses extrémités de conduit un manchon fileté rotatif et à son autre extrémité un filetage qui coopère avec le manchon fileté du composant 2.
De ce fait, par dévissage des manchons filetés, chaque composant peut être enlevé sans démontage du composant amont ou aval.
L'assemblage des composants peut se faire par tout autre moyen ou procédé tel sertissage ou soudage par exemple par induction.

Dans le cas où il est nécessaire de monter des composants non normalisés et dont la hauteur est inférieure à h, il est fait usage de cales telles que représentées aux figures 3 et 4.
Chaque cale comprend une platine 20 de forme carrée ou rectangle et d'épaisseur apte à mettre l'axe de conduit du composant en correspondance avec celui des composants en amont et en aval et de dimensions correspondant à celle du composant qu'elles reçoivent.

Chaque cale est dotée de au moins deux (ou multiple de deux) pions 21 de blocage de la cale par pénétration dans les taraudages de la lame 8.
De préférence, les pions 21 de section inférieure au diamètre des taraudages pour y pénétrer librement, sont filetés pour pouvoir être bloqués par écrou.
Les pions peuvent également ête lisses et bloqués par goupille ou par un clips ou constitués par un système clipsable.

Chaque cale est également dotée de au moins deux (ou multiple de deux) perçages 22 aménagés pour la fixation des composants qu'elles doivent recevoir.

Selon l'invention, la distance entre les pions 21 est égale à nV (ou n est égal à l'unité ou à un multiple ou fraction de l'unité) correspondant au pas des jeux de taraudage 10 et les perçages filetés correspondant aux perçages de fixation des composants à monter.

On peut admettre que les pions 21 soient réalisés d'usine et que les perçages filetés soient réalisés à la demande.
Comme représenté aux dessins, les pions et les perçages sont disposés chacun suivant une diagonale de la platine.

Le système de montage de circuit de gaz selon l'invention, permet de monter chaque ligne sur sa platine avant mise en place dans l'ensemble du circuit et surtout de démonter chaque ligne en totalité sans toucher aux autres et même sans en démonter les composants.

Il permet en outre une grande liberté de conception des circuits de gaz en offrant notamment la possibilité de réaliser des circuits en trois dimensions.

## Revendications

1. Système modulaire de montage de circuits pour la distribution, le contrôle et la mesure des débits de gaz, notamment de gaz de haute pureté, ledit circuit comprenant différents composants tels que vanne d'arrêt à commande manuelle (1), vanne à quatre voies à commande pneumatique (2), vanne pneumatique à deux voies (3), filtre (4), contrôleur de débit massique (5) et autres, les différents composants devant être montés sur un support et raccordés entre eux pour l'établissement de lignes dans le même sens ou interconnectés pour l'établissement de circuits, lesdits composants ayant entre deux extrémités de circuit dans le sens longitudinal et éventuellement dans le sens transversal des dimensions modulaires, caractérisé en ce que le support est constitué d'une ou de plusieurs lames rigides (8) dotées d'ensembles de taraudage (10) pour la fixation des composants, la distance entre deux ensembles successifs étant une valeur constante V normalisée avec les dimensions des composants, lesdites lames (8) dont la largeur est inférieure à la valeur constante V, étant montées sur des dispositifs support (9) de telle sorte qu'il existe un angle de 90° entre les directions longitudinales desdits éléments (8) et (9), les dispositifs supports (9) étant dotés d'ensembles de taraudage (18), la distance entre eux étant une valeur constante égale à V.

2. Système modulaire selon la revendication 1 caractérisé en ce que entre chaque ensemble de taraudage (10) est réalisé un perçage (17) pour le montage de composants de hauteur supérieure à la hauteur normalisée des composants ou pour le passage d'un conduit.

3. Système modulaire selon la revendication 1 caractérisé en ce que entre chaque groupe de taraudage (10) est réalisée une réduction de l'épaisseur de la lame.

4. Système modulaire selon les revendications 2 et 3 caractérisé en ce que le perçage (17) ou la réduction d'épaisseur est réalisée entre les taraudages.

5. Systéme modulaire selon la revendication 1 caractérisé en ce que chaque ensemble de taraudage (10) comprend quatre taraudages disposés deux à deux (15/16) sur un même axe parallèle à l'axe médian longitudinal AA de la lame (8) et décalés l'un par rapport à l'autre.

6. Systéme modulaire selon la revendication 1 caractérisé en ce que chaque ensemble (10) de taraudage comprend un premier jeu de quatre ou plus taraudages (11) disposé en rectangle et un deuxième jeu de quatre ou plus taraudages (12) disposé en un rectangle de plus grande longueur et plus faible largeur que le précédent.

7. Système modulaire selon la revendication 1 et la revendication précédente caractérisé en ce que les taraudages sont remplacés par des perçages circulaires ou oblongs.

8. Système modulaire selon la revendication 1 caractérisé en ce que chaque lame (8) est dotée à son extrémité de perçages (13/14) de fixation au dispositif support (9), lesdits perçages étant oblongs, l'un (14) étant orienté suivant l'axe longitudinal AA de la lame et l'autre étant transversal au dit axe.

9. Système modulaire selon la revendication 1 caractérisé par des cales dotées de au moins deux perçages (22) et de au moins deux pions (21), la distance entre ceux-ci étant égale à NV.

## Claims

1. Modular system for assembling circuits to distribute, control and measure gas flow rates, particularly high-purity gas, said circuit including various components such as manually operated stop valve (1), pneumatically operated four-way valve (2), pneumatic two-way valve (3), filter (4), mass flow rate controller (5) and others, the various components being mounted on a support and cross-connected to establish lines in the same direction or interconnected for establishing circuits, said components having modular dimensions between two ends of the circuit longitudinally and possibly perpendicularly with the support being composed of one or several rigid strips (8) provided with groups of threaded bores (10) for attaching components, the distance between the two successive groups being a constant value V standardized with the dimensions of the components, the said strips (8) with a width smaller than the constant V, being mounted on support devices (9) in such a way that there is a 90° angle between the longitudinal directions of said elements (8) and (9), the support devices (9) being provided with groups of threaded bores (18), the said distance between them being a constant value equal to V.

2. Modular system as in claim 1 except that between each group of threaded bores (10) is a groove (17) for mounting components having a height greater than the standardized component height or to allow the passage of a pipe.

3. Modular system as in claim 1 except that between each group of threaded bores (10) there is a reduction in the thickness of the strip.

4. Modular system as in claims 2 and 3 except that the groove (17) or the reduction in thickness is made between the threaded bores.

5. Modular system as in claim 1 except that each set of threaded bores (10) includes four threaded bores which are aligned in pairs (15/16) along an axis parallel to the longitudinal medial axis AA to the strip (8), each pair being offset in relation to the other.

6. Modular system as in claim 1 except that each group (10) of threaded bores includes one set of four or more threaded bores (11) placed in a rectangle and a second set of four or more threaded bores (12) placed in a longer narrower rectangle than the first.

7. Modular system as in claim 1 and the previous claim except that the threaded bores are replaced by circular or oblong bores.

8. Modular system as in claim 1 except that each strip (8) is equipped at its end with bores (13/14) for attachment to the support device (9), said bores being oblong, with the one's oblong direction (14) being oriented along the longitudinal axis AA of the strip and the other being perpendicular to said axis.

9. Modular system as in claim 1 except for blocks provided with at least two bores (22) and with at least two parts (21), the distance between them being equal to NV.

## Patentansprüche

1. Modulsystem für die Verbindung von Schaltungen zur Versorgung, zur Kontrolle und Messung der Durchflußmenge von Gas, im Besonderen von hoch reinem Gas; die oben genannte Schaltung beinhaltet verschiedene Elemente wie manuell gesteuertes Sperrventil (1), druckluftgesteuertes Vierweg-Ventil (2), druckluftgesteuertes Zweiweg-Ventil (3), Filter (4), Meßgerät der Durchflußmenge (5) und andere; die verschiedenen Elemente müssen auf einen Träger montiert werden und miteinander verbunden werden, um Leitungen in der gleichen Richtung zu erhalten, oder untereinander zusammenhängend geschaltet werden, um Schaltungen zu erhalten; die oben genannten Elemente haben zwischen den äußeren Rändern der Schaltung in Längsrichtung und eventuell in Querrichtung die Ausmaße der Module und sind dadurch gekennzeichnet, daß der Träger durch eine oder mehrere starre Platten (8) gebildet wird, diese Platten sind mit Innengewinde-Einheiten (10) versehen, in welchen die Elemente befestigt werden, der Abstand zwischen zwei aufeinanderfolgenden Elementen entspricht einem in Bezug auf die Ausmaße der Elemente genormten konstanten Wert V; die oben genannten Platten (8), deren Breite kleiner ist als der konstante Wert V, werden so auf Haltevorrichtungen (9) montiert, daß zwischen der Längsrichtung der genannten Elemente (8) und (9) ein 90 ° Winkel entsteht, die Haltevorrichtungen (9) sind mit Innengewinde-Einheiten (18) versehen, der Abstand zwischen diesen Vorrichtungen entspricht einem Wert, der gleich V ist.

2. Modulsystem nach Anspruch 1, dadurch gekennzeichnet, daß zwischen jeder Innengewinde-Einheit (10) eine Bohrung (17) vorgesehen ist, diese Bohrung dient entweder der Montage der Elemente, deren Höhe über der genormten Höhe der Elemente liegt, oder zum Durchlaß einer Leitung.

3. Modulsystem nach Anspruch 1, dadurch gekennzeichnet, daß zwischen jeder Gruppe von Innengewinde-Einheiten (10) die Dicke der Platte verringert wurde.

4. Modulsystem nach Anspruch 2 und 3, dadurch gekennzeichnet, daß die Bohrung (17) oder die Verringerung der Dicke zwischen den Innengewinden durchgeführt wurde.

5. Modulsystem nach Anspruch 1, dadurch gekennzeichnet, daß jede Innengewinde-Einheit (10) aus vier Innengewinden besteht, die auf einer zu der mittleren Längsachse AA der Platte (8) parallelen Achse als zwei zueinander verschobene Paare angeordnet sind (15/16).

6. Modulsystem nach Anspruch 1, dadurch gekennzeichnet, daß die Innengewinde-Einheit (10) über einen ersten als Rechteck angeordneten Satz von vier oder mehr Innengewinden (11) und einen zweiten Satz von vier oder mehr Innengewinden (12) verfügt, die ebenfalls ein Rechteck bilden, das jedoch länger und schmaler ist als das vorherige.

7. Modulsystem nach Anspruch 1 und dem vorstehenden Anspruch, dadurch gekennzeichnet, daß die Innengewinde durch kreisförmige Bohrungen oder durch Bohrungen die länger als breiter sind ersetzt werden.

8. Modulsystem nach Anspruch 1, dadurch gekennzeichnet, daß jede Platte (8) an ihrem Ende mit Bohrungen (13/14) zur Befestigung an der Haltevorrichtung (9) versehen ist; die genannten Bohrungen sind länger als breiter, die Ausrichtung der einen Bohrung (14) folgt der Längsachse AA der Platte, die andere Bohrung liegt quer zu der genannten Achse.

9. Modulsystem nach Anspruch 1, durch Keile gekennzeichnet, die mit mindestens zwei Bohrungen (22) und mindestens zwei Stiften (21) versehen sind, der Abstand zwischen diesen ist gleich NV.
